# FASCICULE DE BREVET EUROPEEN

(11) **EP 2 345 763 B1**
(45) Date de publication et mention de la délivrance du brevet: **20.12.2017**
(21) Numéro de dépôt: 11150873.5
(22) Date de dépôt: 13.01.2011
(51) Int. Cl.: E02B 11/00, E02D 3/10

(54) **Méthode et structure de drainage préfabriquée destinée à la réalisation d'une paroi drainante souterraine**
Vorgefertige Drainagestruktur und dazugehöriges Verfahren um eine unterirdische Drainagewand zu erstellen
Prefabricated drainage structure and method for realising a subterrenean draining wall

(30) Priorité: 14.01.2010 FR 1050223
(43) Date de publication de la demande: 20.07.2011
(73) Titulaire: Soletanche Freyssinet, 92500 Rueil Malmaison (FR)
(72) Inventeur: Ille, Christian, 92500, Rueil Malmaison (FR); Mathieu, Fabrice, 92500, Rueil Malmaison (FR); Cornu, Michel, 92500, Rueil Malmaison (FR)
(74) Mandataire: Balesta, Pierre

(56) Documents cités:
- FR-A1- 2 804 449
- GB-A- 2 208 465
- US-A- 4 678 367
- US-A- 4 741 644

## Description

La présente invention concerne le domaine général de l'environnement, et plus particulièrement celui de la protection des eaux souterraines, de la dépollution des sites et des sols pollués.

La présente invention concerne plus précisément le domaine des parois souterraines de type drainantes qui sont notamment destinées à constituer des barrières anti-pollution. Elle s'applique ainsi notamment au drainage souterrain de nappes phréatiques qui peuvent être chargées en éléments minéraux ou organiques dissous.

Il est connu que les polluants de diverses origines se trouvant dans le sol risquent d'être entraînés par les eaux de ruissellement et ainsi polluer d'autres terrains ou bien des nappes phréatiques.

Bien souvent, des déchets polluants sont déposés sur le sol ou bien enfouis en profondeur sans prendre aucune précaution particulière.

Pour éviter le déplacement des polluants dans le sol, il est déjà connu, notamment par les procédés décrits dans FR 2 750 442 et FR 2 804 449, de réaliser des barrières anti-pollution afin de circonscrire la zone pollué,e. Une telle barrière anti-pollution est réalisée en plusieurs étapes : tout d'abord on excave une première tranchée dans laquelle on vient placer un premier élément tubulaire en forme de T inversé. Cette tranchée est remplie de coulis ou béton de manière à former une première paroi étanche. Une seconde paroi étanche, similaire à la première paroi est ensuite réalisée à distante et dans la continuité de la première paroi moulée. Puis, on excave une troisième tranchée reliant les première et seconde tranchées. En outre, la troisième tranchée est réalisée à l'aide d'une fraise ou d'un autre outil d'excavation qui vient mordre sur les bords des première et seconde parois moulées de manière à ouvrir les portions tubulaires inférieures des éléments tubulaires. Puis, un conduit perforé est descendu dans la troisième tranchée afin d'être positionné au regard des portions tubulaires précitées, de manière à connecter ensemble les éléments tubulaires. Enfin, la troisième tranchée est remplie avec un matériau filtrant. Comme le mentionne FR 2 804 449, l'emboîtement du conduit perforé avec les éléments tubulaires se révèle en pratique être très difficile dans la mesure où l'on doit parfois travailler à des profondeurs très importantes (de l'ordre de la dizaine de mètres), sous fluide d'excavation, c'est-à-dire sans visibilité. Pour cette raison, on se contente souvent de mettre les conduits perforés en coïncidence approximative avec les embouchures des portions tubulaires. Dans ces circonstances, le matériau filtrant a tendance à pénétrer dans les conduits perforés, ce qui risque de les boucher. La chimie des eaux souterraines est également à même de générer des phénomènes de colmatage dans les tranchées drainantes et dans les conduits perforés. Ces phénomènes peuvent être issus notamment de réactions de précipitation, de la formation de gels, ou d'amas bactériens, d'accumulation de fines.

Un but de la présente invention est de remédier aux inconvénients précités.

Un premier objet de l'invention porte sur une structure de drainage préfabriquée destinée à la réalisation d'une paroi drainante souterraine, selon la revendication 1. On comprend donc que la structure de drainage selon l'invention est préfabriquée à l'extérieur de la tranchée avant son introduction dans cette dernière. Autrement dit, le (ou les) tubes formant crépine sont préalablement montés aux colonnes, ce montage pouvant être effectué en usine ou bien directement sur le chantier. La structure de drainage est donc pré-assemblée préalablement à son introduction dans le sol.

La zone de préhension pourra par exemple être constituée par les extrémités des colonnes, cette zone étant arrangée pour coopérer par exemple avec le crochet de l'engin de levage.

Grâce à l'invention, le tube formant crépine est parfaitement positionné par rapport aux colonnes et de surcroît, le matériau drainant ne risque pas d'entrer dans le tube formant crépine par ses extrémités. Par suite, on évite avantageusement les risques de colmatage du tube formant crépine.

En outre, la présente invention permet facilement de monter plusieurs tubes formant crépine de sorte qu'ils soient positionnés à des altitudes différentes. Un intérêt de disposer plusieurs tubes formant crépine est de permettre la collecte de produits flottants (organiques) sur les eaux souterraines mais également de réaliser un drainage des eaux souterraines. Une telle configuration permet d'extraire hors sol des produits flottants collectés par pompage de type écrémage, tout comme le rabattement des eaux souterraines par pompage de rabattement.

Un autre intérêt de l'invention est que la structure drainante est un élément modulaire qui peut être aisément extraite du sol, par exemple grâce à l'engin de levage, afin d'être remplacé ou modifié, ce qui n'était pas envisageable dans l'art antérieur mentionné ci-dessus.

Un autre intérêt de l'invention est de permettre le nettoyage aisé de la structure de drainage et des éventuelles structures de drainage avoisinantes.

Enfin, on précise que la structure de drainage selon l'invention permet avantageusement la construction de parois drainantes continues, lesquelles parois peuvent être disposées dans le prolongement des autres, ou bien former un angle par rapport à ces dernières. Il est en particulier possible de construire un réseau maillé de parois drainantes.

Par ailleurs, ledit au moins un tube formant crépine peut présenter différentes formes. Il pourra par exemple présenter une section circulaire dont le diamètre sera préférentiellement compris entre 100 et 500 millimètres. Pour la collecte des polluants flottants, la section pourra présenter un crépinage partiel en partie haute, la partie basse, s'étendant par exemple sur un tiers du diamètre, pourra rester pleine afin de favoriser l'écoulement vers les colonnes formant puits.

De manière préférentielle, le tube formant crépine est sensiblement orthogonal aux colonnes formant puits. De plus, les colonnes présentent des extrémités inférieures, et ledit au moins un tube formant crépine s'étend préférentiellement entre les extrémités inférieures desdites colonnes.

Selon un aspect particulièrement avantageux de la présente invention, les colonnes présentent des extrémités supérieures, et ledit au moins un conduit de nettoyage s'étend à l'extérieur des colonnes entre l'extrémité supérieure de l'une des colonnes et le tube formant crépine.

Le conduit de nettoyage incliné permet le passage du furet de nettoyage haute pression grâce à quoi il est aisé de procéder à la maintenance de la structure de drainage et aussi des structures de drainage voisines.

Selon une variante, la structure de drainage selon l'invention comporte en outre un second conduit de nettoyage s'étendant à l'extérieur des colonnes entre l'extrémité supérieure de l'autre colonne et le tube formant crépine.

Ce second conduit permet également le passage d'un furet de nettoyage haute pression en vu de procéder au nettoyage de la structure de drainage et des autres structures de drainages voisines.

Dans un mode de réalisation, le tube formant crépine présente deux extrémités connectées auxdites colonnes et au moins l'un des conduits de nettoyage s'étend entre l'extrémité supérieure de l'une des colonnes et l'extrémité du tube formant crépine qui est reliée à l'autre colonne grâce à quoi il est aisé de nettoyer les tubes formant crépine des structures voisines. Dans un autre mode de réalisation, au moins l'un des conduits de nettoyage s'étend entre l'extrémité supérieure de l'une des colonnes et une position sensiblement médiane du tube formant crépine, grâce à quoi ce conduit permet de nettoyer le tube formant crépine de cette structure de drainage.

Avantageusement, la structure de drainage comporte en outre un organe de rigidification, distinct du tube, qui est fixé aux colonnes. Cet organe de rigidification permet d'améliorer la tenue mécanique de la structure de drainage. Il permet également d'améliorer la rigidité de la structure lors de sa manutention.

Pour protéger ledit au moins un conduit de nettoyage, notamment lors de l'introduction de la structure dans la tranchée, l'organe de rigidification comporte avantageusement des montants disposés de part et d'autre dudit au moins un conduit de nettoyage.

Préférentiellement, au moins l'une des zones de préhension est située sur l'organe de rigidification. Un intérêt est de profiter de la rigidité de l'organe de rigidification afin de s'en servir comme zone de préhension.

Selon un autre aspect avantageux de l'invention, les colonnes sont pourvues de glissières longitudinales permettant le montage d'au moins un autre tube formant crépine.

Ces glissières longitudinales sont notamment utilisées pour permettre le positionnement d'un autre tube formant crépine entre deux colonnes appartenant à deux structures de drainage différentes. Pour ce faire, la structure de drainage comporte en outre des jeux de demi-cylindres adaptés pour coulisser le long des glissières longitudinales, étant précisé que les demi-cylindres ont pour fonction de positionner longitudinalement cet autre tube formant crépine par rapport à deux structures de drainage adjacentes.

Un deuxième objet de la présente invention concerne une paroi drainante formée dans un sol, laquelle comporte une structure de drainage préfabriquée selon l'invention, cette dernière étant noyée dans une matière drainante granulaire.

Cette matière drainante granulaire est préférentiellement constituée de granulats et présente des propriétés filtrantes.

Avantageusement, la paroi drainante comporte en outre des moyens de pompage disposés dans au moins l'une des colonnes.

Les colonnes formant puits peuvent donc être équipées de dispositifs d'extraction dynamique des eaux souterraines (rabattement de nappes), de pollutions dissoutes (pompage et traitement hors sol), de produits organiques libres flottants (écrémage) ou coulant (pompage sélectif). En pratique, les pompes pourront être positionnées à des hauteurs différentes dans les colonnes formant puits.

Un troisième objet de l'invention porte sur un ensemble drainant comportant au moins deux parois drainantes selon l'invention, dans lequel les tubes formant crépine des structures de drainage des deux parois drainantes sont reliés entre eux.

Selon une variante, les tubes formant crépine des structures de drainage des deux parois drainantes sont reliés entre eux par le biais d'au moins un troisième tube formant crépine. Sans sortir du cadre de la présente invention, on pourra prévoir plusieurs troisièmes tubes disposés à des hauteurs différentes.

De préférence, ce troisième tube formant crépine est noyé dans une matière filtrante granulaire de sorte que l'ensemble drainant ainsi formé présente une continuité structurelle.

Avantageusement, chacune des extrémités du troisième tube formant crépine est maintenue en position par au moins un demi-cylindre, de préférence entre deux demi-cylindres, lesquels sont engagés dans une glissière s'étendant le long de l'une des colonnes. Comme déjà mentionné ci-dessus, les demi-cylindres participent au positionnement du troisième tube.

Selon une autre variante, les deux parois drainantes ont une colonne commune. Dans cette variante, les structures de drainage sont donc placées bout-à-bout.

Avantageusement, les deux parois drainantes s'étendent dans deux plans verticaux inclinés l'un par rapport à l'autre. De préférence, mais non exclusivement, les deux plans verticaux sont orthogonaux. Cette conformation permet de réaliser un maillage de parois drainantes.

Un quatrième objet de l'invention porte sur un procédé de nettoyage d'un ensemble drainant selon l'invention, dans lequel un dispositif de nettoyage est introduit dans ledit au moins un conduit de nettoyage de l'une des parois drainantes, de manière à nettoyer le tube formant crépine de l'autre paroi drainante et/ou le troisième tube formant crépine.

Le nettoyage des tubes formant crépine est important pour les raisons suivantes. L'un des principaux inconvénients des ouvrages de drainage classiques est lié aux phénomènes de colmatage que l'on peut observer sur des sites naturels ou anthropiques à forte minéralisation. Sur ce type de sites, les conditions géochimiques ou biogéochimiques entraînent la formation de précipités ou autres agrégats qui tendent à obstruer les éléments tubulaires et, par voie de conséquence, diminuent les propriétés drainantes des parois drainantes. Le conduit de nettoyage permet avantageusement d'amener le dispositif de nettoyage, par exemple un furet haute pression, au plus près des tubes formant crépine afin de procéder au nettoyage de ces derniers, le jet d'eau haute pression assurant l'élimination des agrégats formés sur les parois internes des tubes formant crépine.

Un cinquième objet de l'invention porte sur un procédé de réalisation d'un ensemble drainant dans un sol, comportant :
- une étape lors de laquelle on excave une première tranchée dans un sol tout en remplissant ladite première tranchée avec une boue,
- une étape lors de laquelle une première structure de drainage selon l'invention est placée dans la première tranchée,
- une étape lors de laquelle on remplit la première tranchée avec un matériau filtrant granulaire.

L'excavation de la première tranchée est réalisée de préférence sous boue, de préférence biodégradable, de sorte que la première structure de drainage est plongée dans la tranchée remplie de cette boue biodégradable.

Avantageusement, le procédé de réalisation comprend en outre :
- une étape lors de laquelle on excave une deuxième tranchée dans le sol, cette deuxième tranchée étant distante de la première tranchée, tout en remplissant ladite deuxième tranchée avec une boue,
- une étape lors de laquelle une seconde structure de drainage selon l'invention est placée dans la seconde tranchée,
- une étape lors de laquelle on remplit la deuxième tranchée avec un matériau filtrant granulaire,
- une étape lors de laquelle on excave une troisième tranchée s'étendant entre l'une des colonnes de la première tranchée et l'une des colonnes de la deuxième tranchée, tout en remplissant ladite deuxième tranchée avec une boue, lesdites colonnes étant pourvues de glissières longitudinales,
- une étape de montage d'un troisième tube formant crépine, dans laquelle on engage tout d'abord un demi-cylindre dans chacune des glissières des colonnes entre lesquelles s'étend la troisième tranchée, on positionne les demi-cylindres aux pieds des colonnes, puis on positionne le troisième tube formant crépine au fond de la troisième tranchée de telle sorte que chacune des extrémités du troisième tube repose sur l'un des demi-cylindres, les extrémités du troisième tube se trouvant alors en regard d'orifices ménagés dans lesdites colonnes, et
- une étape lors de laquelle on remplit la troisième tranchée avec un matériau filtrant granulaire.

De préférence, après le positionnement du troisième tube formant crépine, on engage également un second demi-cylindre dans chacune des glissières des colonnes entre lesquelles s'étend la troisième tranchée de sorte que les extrémités du troisième tube formant crépine sont maintenues entre les premiers et seconds demi-cylindres. Un intérêt est d'améliorer l'étanchéité du raccord entre le troisième tube formant crépine et les colonnes auxquelles il est connecté.

D'autres caractéristiques et avantages de l'invention apparaîtront mieux à la lecture de la description qui suit d'un mode de réalisation de l'invention donné à titre d'exemple non limitatif.

La description se réfère aux figures annexées, sur lesquelles :
- la figure **1** est une vue en perspective de la structure de drainage préfabriquée selon l'invention comportant deux conduits de nettoyage ;
- la figure **2** illustre l'opération de placement de la structure de drainage de la figure **1** dans une tranchée excavée remplie de boue biodégradable ;
- la figure **3** montre une paroi drainante comportant une structure de drainage selon l'invention ;
- les figures **4A** à **4F** illustrent le procédé de réalisation d'un ensemble drainant selon l'invention comportant deux parois drainantes reliées par un troisième tube formant crépine ;
- la figure **5** montre en détail l'extrémité inférieure d'une colonne formant puits d'une structure de drainage selon l'invention qui est pourvue d'une glissière longitudinale dans laquelle est engagée un demi-cylindre servant à recevoir l'extrémité du tube formant crépine qui réalise la liaison entre deux parois drainantes ;
- la figure **6** est une vue en coupe de l'extrémité inférieure d'une colonne formant puits d'une structure de drainage selon l'invention, illustrant le procédé de nettoyage conforme à l'invention, et
- la figure **7** illustre un autre mode de réalisation d'une structure de drainage selon l'invention comprenant deux tubes de nettoyage permettant le nettoyage du tube formant crépine de la structure.

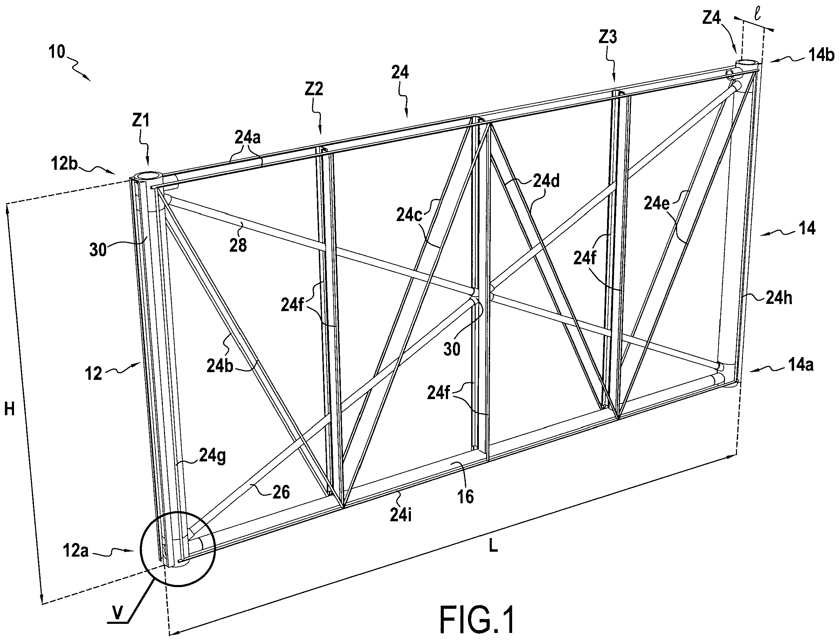

Sur la figure **1****,** on a représenté une structure de drainage **10** préfabriquée conforme à la présente invention. Cette structure de drainage **10** est destinée à la réalisation d'une paroi drainante souterraine.

La structure de drainage **10** constitue en quelque sorte le squelette de la paroi drainante. Dans l'exemple de la figure **1****,** la structure de drainage **10** est réalisée en polyéthylène haute densité, mais peut tout à fait être réalisée dans tout autre matériau rigide. Par ailleurs et conformément à l'invention, la structure de drainage **10** est fabriquée hors sol. En d'autres termes, ses différents éléments constitutifs sont assemblés entre eux avant son introduction dans le sol. La structure de drainage est donc pré-assemblée.

Dans cet exemple non limitatif, la structure de drainage **10** présente la forme générale d'un panneau rectangulaire ayant une longueur **L** de l'ordre de 12 mètres, une largeur **I** de l'ordre de 60 centimètres et une hauteur **H** de l'ordre de 4 mètres.

Comme on le voit sur la figure **1****,** les extrémités longitudinales de la structure de drainage **10** sont constituées par deux colonnes formant puits **12,14** qui sont parallèles et qui s'étendent sensiblement sur toute la hauteur de la structure.

Les colonnes **12,14,** dont le diamètre est préférentiellement de l'ordre de 50 centimètres, présentent une paroi crépinée permettant l'écoulement des fluides à l'intérieur desdites colonnes.

Par ailleurs, un tube formant crépine **16** relie les extrémités inférieures **12a, 14a** des colonnes formant puits **12,14.** Plus précisément, le tube formant crépine comporte une première extrémité **16a** qui est connectée à l'extrémité inférieure **12a** de la colonne **12,** et une seconde extrémité **16b** qui est connectée à l'extrémité inférieure **14a** de la colonne **14.** Ce tube présente préférentiellement un diamètre de l'ordre de 20 centimètres. On comprend donc que le tube formant crépine **16** sera positionné de manière sensiblement horizontale dans la paroi drainante. De plus, on comprend également que le tube formant crépine est apte à recueillir le liquide contenu dans la paroi et à l'acheminer dans les colonnes formant puits **12,14.**

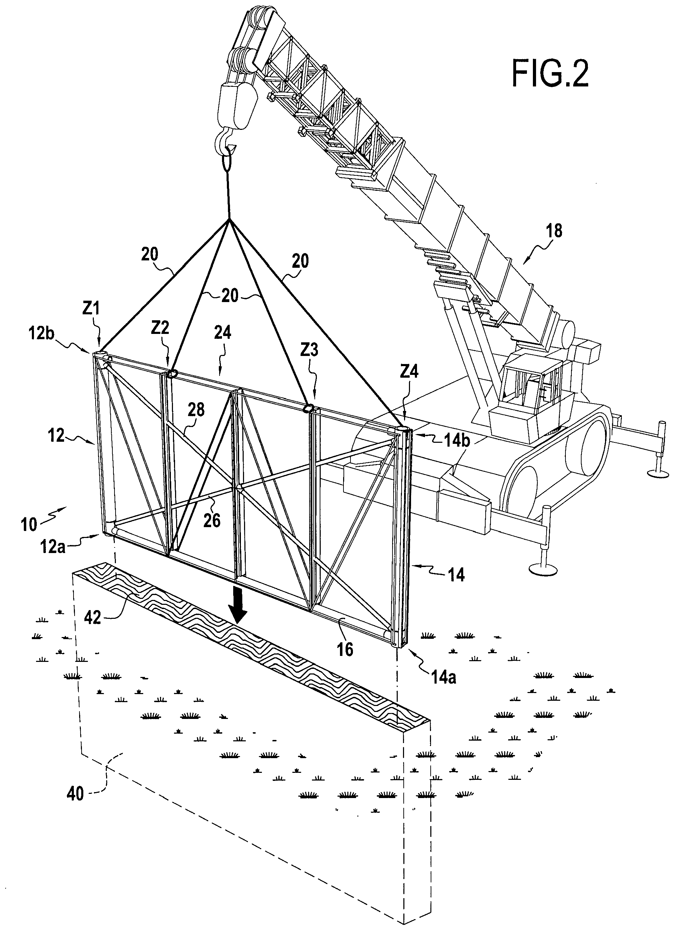

Pour sa manutention, la structure de drainage **10** comporte plusieurs zones de préhension **Z1, Z2, Z3, Z4** qui sont destinées à être reliées à un engin de levage **18.** On constate sur la figure **2** que les zones **Z1** et **Z4** sont situées aux extrémités supérieures **12b,14b** des colonnes. Ces zones **Z1, Z4** sont fixées à des câbles **20** suspendus à un crochet **22** de l'engin de levage **18.**

En se référant à nouveau à la figure **1****,** on constate que la structure de drainage **10** comporte en outre un organe de rigidification **24,** distinct du tube formant crépine **16,** constitués d'éléments de rigidification supérieurs **24a** reliant les extrémités supérieures **12b, 14b** des colonnes **12,14** tout en étant sensiblement parallèles au tube formant crépine **16.**

L'organe de rigidification **24** comporte en outre des éléments de rigidification latéraux **24g** et **24h** qui s'étendent de part et d'autre des colonnes **12,14** selon la hauteur de la structure **10,** ainsi que des éléments de rigidification **24i** inférieurs qui s'étendent de part et d'autre du tube formant crépine **16** selon la longueur de la structure **10.** Les éléments de rigidification **24a, 24g, 24h** et **24i** sont fixés entre eux de manière à former un cadre rigide.

En outre, l'organe de rigidification **24** comprend des éléments de rigidification obliques **24b,24c,24d,24e** reliant les éléments de rigidification supérieurs **24a** aux éléments de rigidification inférieurs **24i** en formant un motif en « W ».

On note aussi que l'organe de rigidification **24** comporte trois paires de montants **24f** disposés entre les colonnes formant puits et parallèles à ces derniers, les montants étant fixés aux éléments de rigidification inférieurs **24i** et aux éléments de rigidification supérieurs **24a.** Chacun de ces montants s'étend entre deux éléments de rigidification obliques **24b, 24c, 24d, 24e** et est disposé une extrémité fixée à l'une des extrémités de ces deux éléments de rigidification.

Par ailleurs, les parties de l'élément de rigidification supérieur **24a** qui sont proches des extrémités supérieures des montants **24f** constituent également des zones de préhension **Z2, Z3** pour les câbles **20** de l'engin de levage **18.**

Selon un aspect de l'invention, la structure de drainage **10** comporte en outre un premier et de préférence un deuxième conduit de nettoyage qui portent les références **26** et **28.** Ces deux tubes sont crépinés et présentent un diamètre de l'ordre de 10 centimètres. Ils sont également distincts des colonnes.

Le premier conduit de nettoyage **28** relie de préférence l'extrémité supérieure **12b** de la colonne **12** à l'extrémité inférieure **14a** de la colonne **14,** tandis que le second conduit de nettoyage **26** relie de préférence l'extrémité supérieure **14b** de la colonne **14** à l'extrémité inférieure **12a** de la colonne **12.** On comprend donc que les premier et second conduits de nettoyage **26, 28** sont disposés en croix selon les diagonales de la forme rectangulaire de la structure de drainage **10.** Plus précisément, les conduits de nettoyage **26,28** sont constitués de quatre portions de conduite reliées entre elles par un raccord **30** dans lequel elles sont emmanchées. Chacun des premier et second conduits de nettoyage s'étend à l'extérieur des colonnes **12,14.**

La fonction de ces conduites de nettoyage **26,28** sera expliquée ci-après.

Comme on peut le voir sur la figure **1****,** les colonnes formant puits **12,14** sont également pourvues de glissières **30** qui s'étendent sur sensiblement toute la hauteur H de la structure de drainage **10,** chacune des glissières étant situées sur un bord extérieur de la structure, c'est-à-dire opposé à l'autre colonne. La fonction des glissières sera décrite ci-après.

Comme mentionné ci-dessus, la structure de drainage **10** est destinée à être introduite dans une tranchée **40** qui est préférentiellement excavée sous boue biodégradable dans un sol **S.** La boue biodégradable **42,** connue par ailleurs, est pompée dans la tranchée au cours de son excavation. Elle empêche les parois de la tranchée de s'effondrer tout en préservant l'environnement. On comprend donc, à l'aide de la figure **2****,** que la structure de drainage **10** est plongée dans la tranchée **40** tranchée remplie de cette boue biodégradable **42.**

Les techniques d'excavation de tranchées sont bien connues par ailleurs et ne seront pas détaillées ici. On mentionne néanmoins que les opérations d'excavation sous boue biodégradable peuvent être réalisées notamment à l'aide d'un outil hydraulique ou d'une benne à câbles. On précise également que les dimensions de la tranchée **40** sont légèrement plus grandes que les dimensions de la structure de drainage **10.**

De préférence, des murettes **44** guides en béton pourront être réalisées en surface, par exemple sur une profondeur d'environ 60 centimètres, notamment afin de faciliter les opérations d'excavation. Ce type de murette a au cours de la construction des parois, des fonctions provisoires, notamment d'aide à l'implantation en plan et en altitude, de calage des éléments mis en place dans la tranchée, en plus d'éviter l'éboulement de la tranchée dans sa partie supérieure.

Dans le cadre de l'invention, les murettes guide ont en outre une fonction permanente pendant la vie de l'ouvrage, notamment en garantissant l'accès au droit de la tranchée, pour les opérations de maintenance et de nettoyage, ou servir de chemin et de protection pour les câbles et conduites éventuellement présents dans la paroi drainante.

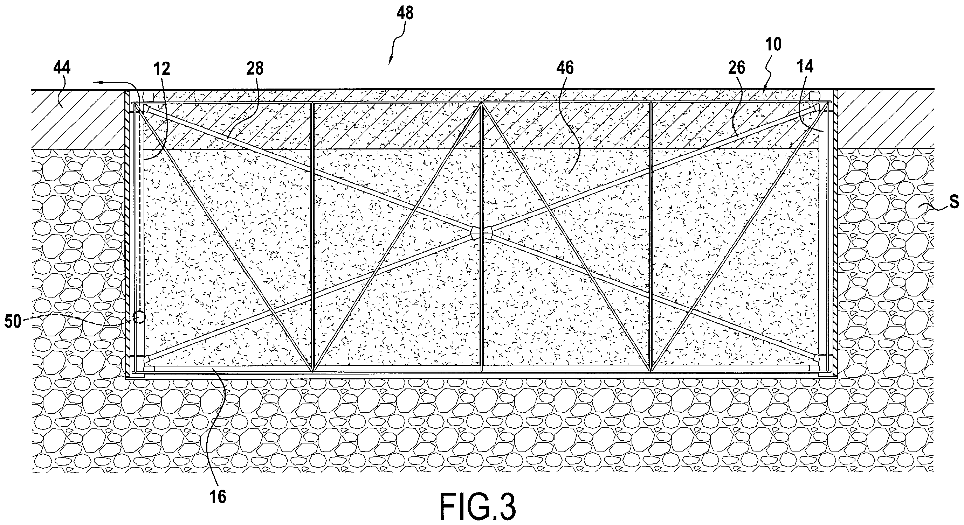

Après l'introduction de la structure de drainage **10** dans la tranchée **40,** cette dernière est remplie avec un matériau filtrant granulaire **46,** par exemple des granulats ayant une taille de 20 à 60 mm, de telle sorte que ledit matériau filtrant enveloppe les éléments constitutifs de la structure de drainage **10.** Comme on le comprend à l'aide de la figure **3****,** la structure de drainage **10** est noyée dans ce matériau filtrant granulaire **46** de manière à former une paroi drainante souterraine élémentaire **48.**

Dans la mesure où les éléments tubulaires constitutifs de la structure de drainage **10** sont crépinés, on comprend que le liquide pollué se trouvant dans la paroi drainante s'écoule progressivement dans les colonnes **12, 14.**

Par ailleurs, cette paroi drainante **48** comporte en outre des moyens de pompage **50** disposées au moins dans la colonne formant puits **12** afin d'extraire les polluants hors du sol.

Généralement, l'étendue de la pollution est sensiblement supérieure à la longueur d'une paroi drainante élémentaire si bien qu'il est nécessaire de réaliser des ensembles drainants continus formés de plusieurs parois drainantes juxtaposées les unes aux autres. Comme on va le voir ci-après, la présente invention permet de réaliser aisément de tels ensembles drainants.

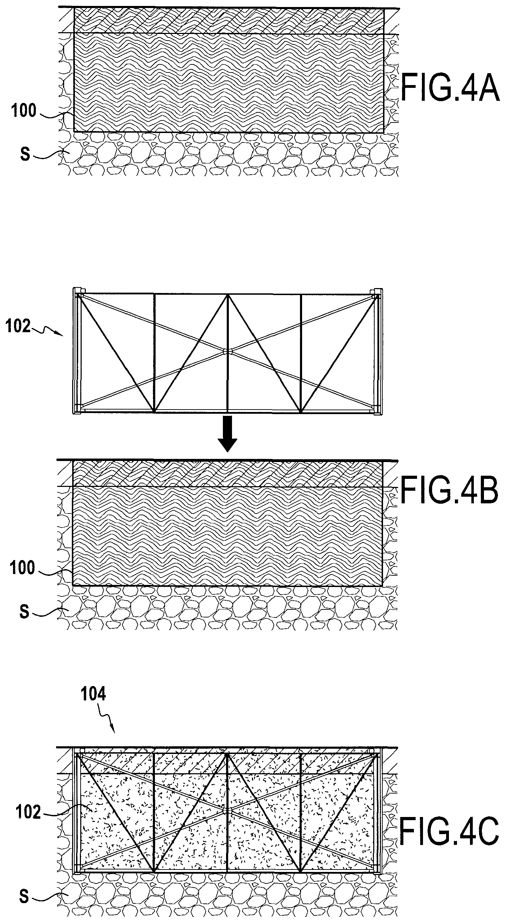

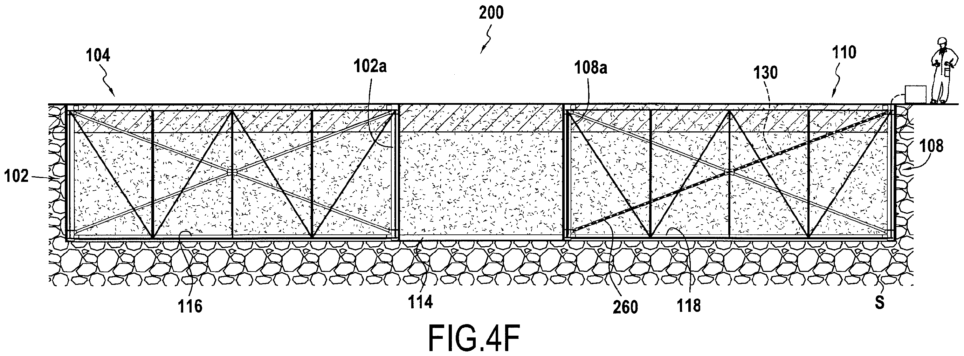

A l'aide des figures **4A** à **4F****,** on va décrire un procédé de réalisation d'un ensemble drainant **200** conforme à la présente invention. La figure **4F** montre l'ensemble drainant **200** à l'état achevé, tandis que les figures **4A** à **4E** illustrent les différentes étapes du procédé.

Le procédé de réalisation d'un ensemble drainant **200** selon l'invention débute par une étape au cours de laquelle on excave une première tranchée **100** dans un sol **S** tout en remplissant ladite première tranchée **100** avec une boue biodégradable. La tranchée **100** obtenue est illustrée sur la figure **4A****.**

Dans un second temps, comme cela est illustré figure **4B** et déjà expliqué ci-dessus, on plonge une première structure de drainage **102,** similaire celle précédemment décrite, dans ladite première tranchée **100.** La tranchée **100** est ensuite remplie d'un matériau filtrant granulaire, à la suite de quoi on obtient une première paroi drainante **104,** visible sur la figure **4C****.**

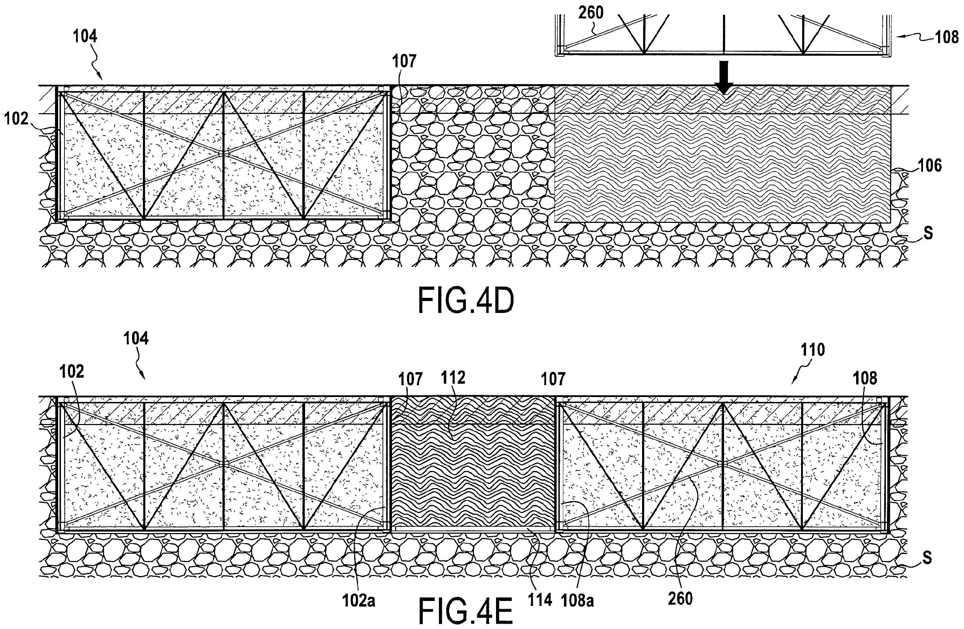

Dans un second temps, ou éventuellement simultanément, on excave une deuxième tranchée **106** sous boue biodégradable, dans laquelle on place une seconde structure de drainage **108** similaire à celles précédemment décrites. Cette étape est illustrée à la figure **4D****.** On constate que la seconde tranchée est excavée à distance de la première tranchée, dans le prolongement de cette dernière. Dans cet exemple, la distance entre les première et deuxième tranchées est de l'ordre de 6 mètres soit environ la moitié de la longueur des première et deuxième tranchées.

On remplit ensuite la deuxième tranchée d'un matériau filtrant granulaire, à la suite de quoi on obtient une seconde paroi drainante **110.**

Dans un troisième temps, on excave une troisième tranchée **112** entre les première et deuxième tranchées, comme cela est illustré à la figure **4E****.** Des moyens de protection **107** sous forme de palplanches peuvent être placés contre les colonnes **102a, 108a** des structures de drainage **102,108** afin de protéger ces dernières lors de l'excavation de la troisième tranchée **112.** Ces moyens de protection **107** sont mis en place de préférence avant le remplissage de la tranchée avec le matériau filtrant.

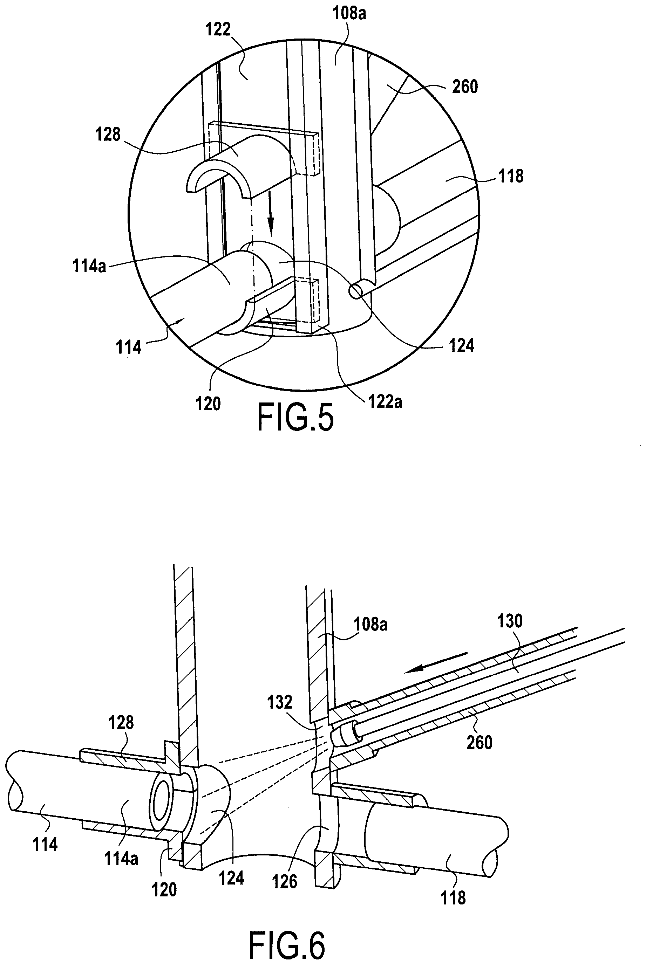

Après que la troisième tranchée **112** a été excavée, on réalise une étape de montage d'un troisième tube formant crépine **114** reliant les tubes formant crépines **116,118** des première et deuxième structures de drainage **102,108.** Pour ce faire, on engage un demi-cylindre **120** dans chacune des glissières **122** des colonnes **102a,108a.** Comme on le constate à l'aide de la figure **5****,** les demi-cylindres **120** sont ouverts vers les extrémités supérieures des colonnes. En cas de besoin, pour faciliter leur descente, le demi-cylindre **120** est amené par des moyens externes jusqu'à sa position descendue à l'extrémité inférieure de la colonne **108a,** comme cela est représenté sur la figure **5****.** On comprend que les demi-cylindres **120** coulissent le long des colonnes jusqu'à venir en butée contre le bord inférieur **122a** de chacune des glissières **122.** Dans cette position finale, les demi-cylindres **120** sont disposés en regard d'orifices **124** ménagés dans les extrémités inférieures des colonnes. Ces orifices **124** permettent de mettre en communication l'intérieur des colonnes avec le troisième tube formant crépine **114.** Cette mise en communication est particulièrement visible sur la figure **6****.** Sur cette dernière figure, on constate également que la colonne **108a** est pourvue d'un autre orifice **126** destinée à mettre en communication l'intérieur de la colonne **108a** avec le tube formant crépine **118** de la structure de drainage **108.**

Après que les demi-cylindres **120** aient été positionnés aux pieds des colonnes **102a,108a,** on positionne le troisième tube formant crépine **114** au fond de la troisième tranchée de telle sorte que les extrémités **114a** de ce troisième tube viennent reposer sur les demi-cylindres **120** tout en étant en regard des orifices **124.** Grâce à quoi, le troisième tube formant crépine **114** est parfaitement positionné par rapport à l'orifice **124.**

Pour améliorer le maintien du troisième tube formant crépine **114,** on positionne un autre demi-cylindre **128** à chaque extrémité du troisième tube formant crépine **114.** En se référant à nouveau à la figure **5****,** on constate que ces autres demi-cylindres **128** sont ouverts vers les extrémités inférieures des colonnes. Les autres demi-cylindres **128** sont engagés dans les glissières **122** et descendus aux pieds des colonnes de manière à former avec le demi-cylindre **120** un manchon entourant chacune des extrémités **114a** du troisième tube formant crépine **114.** On comprend ainsi que l'invention permet une fixation aisée, précise et substantiellement étanche du troisième tube formant crépine **114** aux colonnes formant puits **102a, 108a.** Cette fixation est particulièrement visible sur la figure **6****.**

L'intérêt des conduits de nettoyage de la structure de drainage qui ont été précédemment décrits va maintenant être expliqué à l'aide des figures **4F** et **6****.**

Comme on le conçoit en se référant à la figure **4F****,** le tube formant crépine **114** est très difficilement accessible depuis l'extérieur, ce qui pose un problème pour son nettoyage. Il a déjà été mentionné que le nettoyage périodique des tubes formant crépine disposés de manière sensiblement horizontale est nécessaire notamment lorsque l'ensemble drainant **200** est installé dans un environnement propice au colmatage des tubes formant crépine.

Un des aspects avantageux de l'invention est justement de proposer une solution pour nettoyer les tubes formant crépine qui sont disposés au fond de l'ensemble drainant.

Pour le nettoyage du tube formant crépine **114** reliant les deux structures de drainage, un furet de nettoyage à haute pression est notamment introduit dans le conduit de nettoyage **260** dont une extrémité est visible sur la figure **6****.** Dans cet exemple, le nettoyage du tube formant crépine **114** est effectué en introduisant le furet **130** dans le conduit de nettoyage **260** de la deuxième structure de drainage **108** au moins jusqu'à l'extrémité inférieure de la colonne **108a.** Comme on le voit sur cette figure **6****,** une ouverture **132** est ménagée à l'extrémité inférieure de la colonne **108a,** au dessus de l'orifice **126,** pour permettre la mise en communication du conduit de nettoyage **260** avec l'intérieur de la colonne **108a.** Cette ouverture **132** permet l'introduction du furet **130** dans la colonne **108a** puis dans le troisième tube formant crépine **114,** à la suite de quoi on peut avantageusement nettoyer ce troisième tube formant crépine **114,** puis le tube **116** dans la même opération si on le souhaite, voire les tubes suivants le cas échéant.

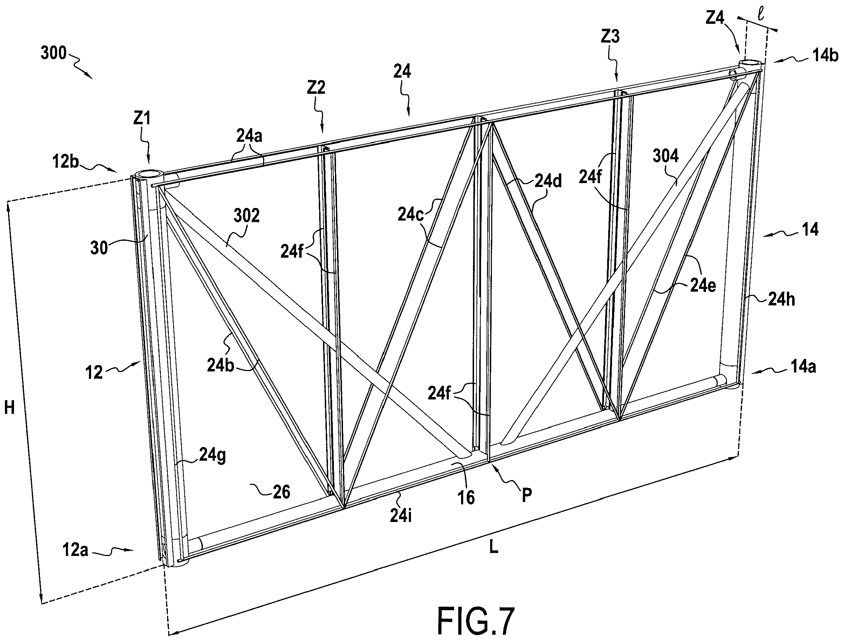

Sur la figure **7****,** on a représenté une variante de la structure de drainage **300** dans laquelle chacun des conduits de nettoyage **302,304** s'étend respectivement entre l'une des extrémités supérieures **12b,14b** des colonnes **12,14** et le tube formant crépine **16** en une position P sensiblement médiane, grâce à quoi il est avantageusement possible de nettoyer ce tube formant crépine en introduisant un furet de nettoyage dans l'un ou l'autre de ces conduits.

Par suite, on comprend à l'aide de la figure **7****,** que le conduit de nettoyage **302** permet avantageusement de nettoyer la partie du tube formant crépine s'étendant entre la position médiane **P** et l'extrémité inférieure **14a** de la colonne **14** opposée à la colonne **12** d'où s'étend le conduit **302.** Le conduit de nettoyage **304** permet quant à lui de nettoyer la partie du tube formant crépine **16** s'étendant entre l'extrémité inférieure **12a** de la colonne **12** et la position médiane **P.**

## Revendications

1. Structure de drainage préfabriquée (10, 102, 108, 300) destinée à la réalisation d'une paroi drainante souterraine, comportant :
- au moins deux colonnes (12, 14, 102a, 108a) formant puits qui sont sensiblement parallèles, lesdites colonnes (12, 14) présentant des extrémités supérieures (12b, 14b)
- au moins un tube formant crépine (16, 116, 118) connecté auxdites colonnes, et
- au moins une zone de préhension (Z1, Z2, Z3, Z4) destinée à être reliée à un engin de levage (18) en vue de la manutention de ladite structure,
**caractérisée en ce qu'**elle comprend en outre au moins un conduit de nettoyage (26, 304) s'étendant à l'extérieur des colonnes soit entre l'extrémité supérieure (14b) de l'une des colonnes (12, 14, 102a, 108a) et ledit tube formant crépine (16, 116, 118), soit entre l'extrémité supérieure de l'une des colonnes (12, 14, 102a, 108a) et l'extrémité inférieure de l'autre colonne (12, 14, 102a, 108a).

2. Structure de drainage préfabriquée selon la revendication **1, caractérisée en ce que** le tube formant crépine (16) est sensiblement orthogonal aux colonnes formant puits.

3. Structure de drainage préfabriquée selon la revendication **1** ou **2, caractérisée en ce que** les colonnes (12, 14) présentent des extrémités inférieures (12a, 14a), et **en ce que** le tube formant crépine (16) s'étend entre les extrémités inférieures desdites colonnes.

4. Structure de drainage selon l'une des revendications **1 à 3, caractérisée en ce qu'**elle comporte en outre un second conduit de nettoyage (28, 302) s'étendant entre l'extrémité supérieure (12b) de l'autre colonne (12) et le tube formant crépine.

5. Structure de drainage selon l'une quelconque des revendications **1** à **4, caractérisée en ce qu'**elle comporte en outre un organe de rigidification (24), distinct du tube formant crépine, qui est fixé aux colonnes formant puits.

6. Structure de drainage selon la revendication **5, caractérisée en ce que** l'organe de rigidification (24) comporte des montants (24f) disposés de part et d'autre dudit au moins un conduit de nettoyage (26, 28).

7. Structure de drainage selon la revendication **5** ou **6, caractérisée en ce qu'**au moins l'une des zones de préhension (Z2, Z3) est située sur l'organe de rigidification.

8. Structure de drainage selon l'une quelconque des revendications **1** à **7, caractérisée en ce que** les colonnes sont pourvues de glissières (30, 122) s'étendant le long des colonnes et permettant le montage d'au moins un autre tube formant crépine (114).

9. Paroi drainante élémentaire (48, 104, 110) formée dans un sol, **caractérisée en ce qu'**elle comporte une structure de drainage préfabriquée (10, 102, 108) selon l'une quelconque des revendications **1** à **8,** ladite structure étant noyée dans une matière drainante granulaire.

10. Paroi drainante selon la revendication **9, caractérisée en ce qu'**elle comporte en outre des moyens de pompage (50) disposés dans au moins l'une des colonnes.

11. Ensemble drainant (200) comportant au moins deux parois drainantes (104, 110) selon la revendication **9** ou **10,** dans lequel les tubes formant crépine (116, 118) des structures de drainage des deux parois drainantes sont reliés entre eux.

12. Ensemble drainant selon la revendication **11, caractérisé en ce que** les tubes formant crépine (116, 118) des structures de drainage des deux parois drainantes sont reliés entre eux par le biais d'au moins un troisième tube formant crépine (114).

13. Ensemble drainant selon la revendication **12, caractérisé en ce que** chacune des extrémités (114a) du troisième tube formant crépine (114) est maintenue en position à l'aide d'au moins un demi-cylindre (120, 128), lesquels sont engagés dans une glissière (122) s'étendant le long de l'une des colonnes.

14. Ensemble drainant selon la revendication **11, caractérisé en ce que** les deux parois drainantes ont une colonne commune.

15. Ensemble drainant selon l'une quelconque des revendications **11** à **14, caractérisé en ce que** les deux parois drainantes s'étendent dans deux plans verticaux inclinés l'un par rapport à l'autre.

16. Procédé de nettoyage d'un ensemble drainant selon l'une quelconque des revendications **11** à **15,** dans lequel un dispositif de nettoyage est introduit dans ledit au moins un conduit de nettoyage de l'une des parois drainantes, de manière à nettoyer le tube formant crépine de l'autre paroi drainante et/ou le troisième tube formant crépine.

17. Procédé de réalisation d'un ensemble drainant dans un sol, **caractérisé en ce qu'**il comporte :
- une étape lors de laquelle on excave une première tranchée dans un sol tout en remplissant ladite première tranchée avec une boue de préférence biodégradable,
- une étape lors de laquelle une première structure de drainage selon l'une quelconque des revendications **1** à **8** est placée dans la première tranchée,
- une étape lors de laquelle on remplit la première tranchée avec un matériau filtrant granulaire.

18. Procédé de réalisation d'un ensemble drainant selon la revendication **17, caractérisé en ce qu'**il comprend en outre :
- une étape lors de laquelle on excave une deuxième tranchée dans le sol, cette deuxième tranchée étant distante de la première tranchée, tout en remplissant ladite deuxième tranchée avec une boue,
- une étape lors de laquelle une seconde structure de drainage selon l'une quelconque des revendications **1** à **8** est placée dans la seconde tranchée,
- une étape lors de laquelle on remplit la deuxième tranchée avec un matériau filtrant granulaire,
- une étape lors de laquelle on excave une troisième tranchée s'étendant entre l'une des colonnes de la première tranchée et l'une des colonnes de la deuxième tranchée, tout en remplissant ladite deuxième tranchée avec une boue, lesdites colonnes étant pourvues de glissières longitudinales,
- une étape de montage d'un troisième tube formant crépine, dans laquelle on engage tout d'abord un demi-cylindre dans chacune des glissières des colonnes entre lesquelles s'étend la troisième tranchée, on positionne les demi-cylindres aux pieds des colonnes, puis on positionne le troisième tube formant crépine au fond de la troisième tranchée de telle sorte que chacune des extrémités du troisième tube repose sur l'un des demi-cylindres, les extrémités du troisième tube se trouvant alors en regard d'orifices ménagés dans lesdites colonnes, et
- une étape lors de laquelle on remplit la troisième tranchée avec un matériau filtrant granulaire.

## Patentansprüche

1. Vorgefertigte Drainagestruktur (10, 102, 108, 300), die zum Herstellen einer unterirdischen Drainagewand bestimmt ist, umfassend:
- mindestens zwei Schachtsäulen (12, 14, 102a, 108a), die im Wesentlichen parallel sind, wobei die Säulen (12, 14) obere Enden (12b, 14b) aufweisen,
- mindestens ein Siebrohr (16, 116, 118), das mit den Säulen verbunden ist, und
- mindestens eine Greifzone (Z1, Z2, Z3, Z4), die dazu bestimmt ist, mit einem Hebezeug (18) zum Handhaben der Struktur verbunden zu werden,
**dadurch gekennzeichnet, dass** sie ferner mindestens einen Reinigungskanal (26, 304) umfasst, der sich außerhalb der Säulen entweder zwischen dem oberen Ende (14b) einer der Säulen (12, 14, 102a, 108a) und dem Siebrohr (16, 116, 118) oder zwischen dem oberen Ende einer der Säulen (12, 14, 102a, 108a) und dem unteren Ende der anderen Säule (12, 14, 102a, 108a) erstreckt.

2. Vorgefertigte Drainagestruktur nach Anspruch 1, **dadurch gekennzeichnet, dass** das Siebrohr (16) im Wesentlichen orthogonal zu den Schachtsäulen verläuft.

3. Vorgefertigte Drainagestruktur nach Anspruch1 oder 2, **dadurch gekennzeichnet, dass** die Säulen (12, 14) untere Enden (12a, 14a) aufweisen, und dass das Siebrohr (16) sich zwischen den unteren Enden der Säulen erstreckt.

4. Drainagestruktur nach einem der Ansprüche 1 bis 3, **dadurch gekennzeichnet, dass** sie ferner einen zweiten Reinigungskanal (28, 302) umfasst, der sich zwischen dem oberen Ende (12b) der anderen Säule (12) und dem Siebrohr erstreckt.

5. Drainagestruktur nach einem der Ansprüche 1 bis 4, **dadurch gekennzeichnet, dass** sie ferner ein Aussteifungselement (24) aufweist, das von dem Siebrohr getrennt und an den Schachtsäulen befestigt ist.

6. Drainagestruktur nach Anspruch 5, **dadurch gekennzeichnet, dass** das Aussteifungselement (24) Streben (24f) aufweist, die auf beiden Seiten des mindestens einen Reinigungskanals (26, 28) angeordnet sind.

7. Drainagestruktur nach Anspruch 5 oder 6, **dadurch gekennzeichnet, dass** sich auf dem Aussteifungselement mindestens eine der Greifzonen (Z2, Z3) befindet.

8. Drainagestruktur nach einem der Ansprüche 1 bis 7, **dadurch gekennzeichnet, dass** die Säulen mit Führungen (30,122) versehen sind, die sich entlang der Säulen erstrecken und die Montage mindestens eines weiteren Siebrohrs (114) ermöglichen.

9. Elementare Drainagewand (48, 104, 110), die in einem Boden ausgebildet ist, **dadurch gekennzeichnet, dass** sie eine vorgefertigte Drainagestruktur (10, 102, 108) nach einem der Ansprüche 1 bis 8 aufweist, wobei die Struktur in ein körniges Drainagematerial eingebettet ist.

10. Drainagewand nach Anspruch 9, **dadurch gekennzeichnet, dass** sie ferner Pumpenmittel (50) aufweist, die in mindestens einer der Säulen angeordnet sind.

11. Drainageanordnung (200), umfassend mindestens zwei Drainagewände (104, 110) nach Anspruch 9 oder 10, wobei die Siebrohre (116, 118) der Drainagestrukturen der beiden Drainagewände miteinander verbunden sind.

12. Drainageanordnung nach Anspruch 11, **dadurch gekennzeichnet, dass** die Siebrohre (116, 118) der Drainagestrukturen der beiden Drainagewände mittels mindestens eines dritten Siebrohrs (114) miteinander verbunden sind.

13. Drainageanordnung nach Anspruch 12, **dadurch gekennzeichnet, dass** jedes Ende (114a) des dritten Siebrohrs (114) mittels mindestens eines Halbzylinders (120, 128) in Position gehalten wird, wobei diese in eine sich entlang einer der Säulen erstreckende Führung (122) eingreifen.

14. Drainageanordnung nach Anspruch 11, **dadurch gekennzeichnet, dass** die beiden Drainagewände eine gemeinsame Säule aufweisen.

15. Drainageanordnung nach einem der Ansprüche 11 bis 14, **dadurch gekennzeichnet, dass** sich die beiden Drainagewände in zwei zueinander geneigten senkrechten Ebenen erstrecken.

16. Verfahren zum Reinigen einer Drainageanordnung nach einem der Ansprüche 11 bis 15, wobei eine Reinigungsvorrichtung in den mindestens einen Reinigungskanal einer der Drainagewände eingeführt wird, um das Siebrohr der anderen Drainagewand und/oder das dritte Siebrohr zu reinigen.

17. Verfahren zur Herstellung einer Drainageanordnung in einem Boden, **dadurch gekennzeichnet, dass** es umfasst:
- einen Schritt, bei dem ein erster Graben in einem Boden ausgehoben wird und zugleich der erste Graben mit einem vorzugsweise biologisch abbaubaren Schlamm gefüllt wird,
- einen Schritt, bei dem eine erste Drainagestruktur nach einem der Ansprüche 1 bis 8 in den ersten Graben gesetzt wird,
- einen Schritt, bei dem der erste Graben mit körnigem Filtermaterial gefüllt wird.

18. Verfahren zur Herstellung einer Drainageanordnung nach Anspruch 17, **dadurch gekennzeichnet, dass** es ferner umfasst:
- einen Schritt, bei dem ein zweiter Graben in dem Boden ausgehoben wird, wobei der zweite Graben vom ersten Graben entfernt ist und zugleich der zweite Graben mit einem Schlamm gefüllt wird,
- einen Schritt, bei dem eine zweite Drainagestruktur nach einem der Ansprüche 1 bis 8 in den zweiten Graben gesetzt wird,
- einen Schritt, bei dem der zweite Graben mit körnigem Filtermaterial gefüllt wird,
- einen Schritt, bei dem ein dritter Graben, der sich zwischen einer der Säulen des ersten Grabens und einer der Säulen des zweiten Grabens erstreckt, ausgehoben wird und zugleich der zweite Graben mit einem Schlamm gefüllt wird, wobei die Säulen mit Längsführungen versehen sind,
- einen Schritt zum Montieren eines dritten Siebrohrs, bei dem zuerst ein Halbzylinder in jede der Führungen der Säulen, zwischen denen sich der dritte Graben erstreckt, eingesetzt wird, die Halbzylinder an den Füßen der Säulen positioniert werden und dann das dritte Siebrohr am Boden des dritten Grabens so positioniert wird, dass jedes Ende des dritten Rohrs auf einem der Halbzylinder ruht, wobei die Enden des dritten Rohrs sich dann neben den in den Säulen vorgesehenen Öffnungen befinden, und
- einen Schritt, bei dem der dritte Graben mit körnigem Filtermaterial gefüllt wird.

## Claims

1. A prefabricated drainage structure (10, 102, 108, 300) intended to produce a subterranean draining wall, including:
- at least two well-forming columns (12, 14, 102a, 108a) that are substantially parallel, said columns (12, 14) having upper ends (12b, 14b),
- at least one strainer-forming tube (16, 116, 118) connected to said columns, and
- at least one gripping zone (Z1, Z2, Z3, Z4) intended to be connected to a lifting apparatus (18) for handling said structure,
**characterized in that** it further comprises at least one cleaning pipe (26, 304) extending outside the columns, either between the upper end (14b) of one of the columns (12, 14, 102a, 108a) and said strainer-forming tube (16, 116, 118), or between the upper end of one of the columns (12, 14, 102a, 108a) and the lower end of the other column (12, 14, 102a, 108a).

2. The prefabricated drainage structure according to claim **1, characterized in that** the strainer-forming tube (16) is substantially orthogonal to the well-forming columns.

3. The prefabricated drainage structure according to claim **1** or **2, characterized in that** the columns (12, 14) have lower ends (12a, 14a), and **in that** the strainer-forming tube (16) extends between the lower ends of said columns.

4. The drainage structure according to one of claims **1 to 3, characterized in that** it further includes a second cleaning pipe (28, 302) extending between the upper end (12b) of the other column (12) and the strainer-forming tube.

5. The drainage structure according to any one of claims **1** to **4, characterized in that** it further includes a stiffening member (24), separate from the strainer-forming tube, that is fastened to the well-forming columns.

6. The drainage structure according to claim **5, characterized in that** the stiffening member (24) includes uprights (24f) arranged on either side of said at least one cleaning pipe (26, 28).

7. The drainage structure according to claim 5 or 6, **characterized in that** at least one of the gripping zones (Z2, Z3) is situated on the stiffening member.

8. The drainage structure according to any one of claims **1** to **7, characterized in that** the columns are provided with guideways (30, 122) extending along the columns and allowing at least one other strainer-forming tube (114) to be mounted.

9. An elementary drainage wall (48, 104, 110) formed in the ground, **characterized in that** it includes a prefabricated drainage structure (10, 102, 108) according to any one of claims **1** to **8,** said structure being embedded in a granular drainage material.

10. The drainage wall according to claim **9, characterized in that** it further includes pumping means (50) arranged in at least one of the columns.

11. A drainage assembly (200) including at least two drainage walls (104, 110) according to claim **9** or **10,** wherein the strainer-forming tubes (116, 118) of the drainage structures of the two drainage walls are connected to one another.

12. The drainage assembly according to claim **11, characterized in that** the strainer-forming tubes (116, 118) of the drainage structures of the two drainage walls are connected to one another via at least one third strainer-forming tube (114).

13. The drainage assembly according to claim **12, characterized in that** each of the ends (114a) of the third strainer-forming tube (114) is kept in position using at least one half-cylinder (120, 128), which are engaged in a guideway (122) extending along one of the columns.

14. The drainage assembly according to claim **11, characterized in that** the two drainage walls have a shared column.

15. The drainage assembly according to any one of claims **11** to **14, characterized in that** the two drainage walls extend in two vertical planes inclined relative to one another.

16. A method for cleaning a drainage assembly according to any one of claims **11** to **15,** wherein a cleaning device is inserted into said at least one cleaning pipe of one of the drainage walls, so as to clean the strainer-forming tube of the other drainage wall and/or the third strainer-forming tube.

17. A method for producing a drainage assembly in the ground, **characterized in that** it includes:
- a step during which a first trench is dug in the ground while filling said first trench with sludge, preferably biodegradable,
- a step during which a first drainage structure according to any one of claims **1** to **8** is placed in the first trench,
- a step during which the first trench is filled with a granular filtration material.

18. The method for producing a drainage assembly according to claim **17, characterized in that** it further comprises:
- a step for digging a second trench in the ground, this second trench being separated from the first trench, while filling said second trench with sludge,
- a step during which a second drainage structure according to any one of claims **1** to **8** is placed in the second trench,
- a step during which the second trench is filled with a granular filtration material,
- a step during which a third trench is dug extending between one of the columns of the first trench and one of the columns of the second trench, while filling said second trench with sludge, said columns being provided with longitudinal guideways,
- a step for mounting a third strainer-forming tube, in which a half-cylinder is first engaged in each of the guideways of the columns between which the third trench extends, the half-cylinders are positioned at the feet of the columns, then the third strainer-forming tube is positioned at the bottom of the third trench such that each of the ends of the third tube rests on one of the half-cylinders, the ends of the third tube then being across from orifices arranged in said columns, and
- a step during which the third trench is filled with a granular filtration material.
